(19) Europäisches Patentamt
European Patent Office
Office européen des brevets

(11) **EP 3 062 501 B1**

(12) **EUROPÄISCHE PATENTSCHRIFT**

(45) Veröffentlichungstag und Bekanntmachung des Hinweises auf die Patenterteilung:
**05.07.2017 Patentblatt 2017/27**

(51) Int Cl.:
***H04N 1/40*** *(2006.01)*

(21) Anmeldenummer: **16156648.4**

(22) Anmeldetag: **22.02.2016**

(54) **VERFAHREN UND VORRICHTUNG ZUR AUSWAHL EINER ABBILDUNGSVORSCHRIFT VON FARBE NACH GRAU**

METHOD AND DEVICE FOR SELECTING A REPRESENTATION SPECIFICATION FROM COLOR TO GRAYSCALE

PROCÉDÉ ET DISPOSITIF DESTINÉS À SELECTIONNER UNE REGLE DE REPRESENTATION DES COULEURS VER LE GRIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2015 AT 501432015**

(43) Veröffentlichungstag der Anmeldung:
**31.08.2016 Patentblatt 2016/35**

(73) Patentinhaber: **AIT Austrian Institute of Technology GmbH**
**1220 Wien (AT)**

(72) Erfinder:
• **Penz, Harald**
  **1120 Wien (AT)**
• **Rümmele, Thomas**
  **1070 Wien (AT)**

(74) Vertreter: **Wildhack & Jellinek**
**Patentanwälte**
**Landstraßer Hauptstraße 50**
**1030 Wien (AT)**

(56) Entgegenhaltungen:
**US-A1- 2002 005 855     US-A1- 2006 072 158**
**US-A1- 2011 176 156     US-A1- 2013 236 091**

**Beschreibung**

Die Erfindung betrifft ein Verfahren und eine Vorrichtung zur Auswahl einer Abbildungsvorschrift zur pixelweisen Transformation eines Farbbilds gemäß den Ansprüchen 1 und 7. Um ein digitales Farbbild mit drei Farbkanälen in ein Graustufenbild, also ein monochromes Bild bzw. ein Bild mit nur einem Farbkanal umzuwandeln, kann man die Farbkanäle mit Gewichtungsfaktoren $w_r$, $w_g$, $w_b$ multiplizieren und die einzelnen erhaltenen Produkte addieren.

In der US 2002/0005855 A1 wird eine Graustufen-Umwandlung vorgeschlagen, in der die Verhältnisse der RGB Farbkanäle angepasst werden können, während die Ergebnisse auf einem Bildschirm angezeigt werden. Zusätzlich ist eine gamma-Korrektur möglich. Auch die US 2006/0072158 A1, die US 2013/0236091 A1 und die US2011/0176156 offenbaren Aspekte solch einer Graustufen-Umwandlung,

Bezeichnet also B ein Farbbild mit drei Farbkanälen, nämlich einem roten Farbkanal $B_r$, einem grünen Farbkanal $B_g$ und einem blauen Farbkanal $B_b$, und bezeichnen $B_r[x,y]$, $B_g[x,y]$ bzw. $B_b[x,y]$ den Rotwert, Grünwert bzw. Blauwert des Pixels an der Bildposition mit den Koordinaten x, y, dann kann pixelweise ein zugehörige Graustufenbild I gemäß der Formel

$$I[x,y] = U(B_r[x,y], B_g[x,y], B_b[x,y]) = w_r \cdot B_r[x,y] + w_g \cdot B_g[x,y] + w_b \cdot B_b[x,y]$$

berechnet werden. Hierbei bezeichnet U(r,g,b) eine Transformation, die ausgehend von den, einem Pixel zugeordneten Farbwerten r, g, b einen Grauwert i = U(r,g,b) erstellt. Die Gewichtungsfaktoren $w_r$, $w_g$, $w_b$ sind dabei meist so gewählt, dass sie die Farbempfindlichkeit des menschlichen Auges berücksichtigen. Dazu hat sich die Auswahl $w_r$=0,299; $w_g$=0,587; $w_b$=0,014 als vorteilhaft erwiesen. Für manche Anwendungen ist diese Mischung aber nicht optimal. Ein typisches Beispiel dafür ist das maschinelle Lesen von Schriftzeichen, wenn Schrift und/oder Hintergrund nicht schwarzweiß sondern färbig sind, wie dies beispielsweise bei Seriennummern von Banknoten der Fall ist. Um bei der Produktion und/oder Sortierung nicht einen eigenen Sensor für diesen Bereich einsetzen zu müssen, ist es vorteilhaft die Überprüfung der Seriennummer anhand des Farbbildes B vorzunehmen, das für die ganze Banknote bzw. die Banknotenseite vorliegt. Auf diese Weise kann aber oft nur eine moderat hohe Auflösung erzielt werden. Es ist von Vorteil, das Farbbild B so umzuwandeln, dass ein Text- oder Symbolerkennungsprogramm (OCR) ein gut lesbares Graustufenbild I als Eingangsgröße erhält. Dafür ist es vorteilhaft, die Gewichtungsfaktoren $w_r$, $w_g$, $w_b$ an die jeweilige Banknotenkategorie anzupassen, z.B. an 50-Euro-Scheine, und auch negative Koeffizienten zuzulassen. So könnte z.B. die Transformation $U(B_r[x,y]$, $B_g[x,y]$, $B_b[x,y]) = 0,5 \cdot B_r[x,y] - 0,5 \cdot B_g[x,y]$ günstig sein. Hierdurch ergeben sich potentiell auch negative Werte, bzw. allgemein Werte, die den erlaubten Wertebereich für die Pixel des Graustufenbildes I unter bzw. überschreiten.

Es ist daher vorteilhaft, neben den Gewichtungsfaktoren $w_r$, $w_g$, $w_b$ einen zusätzlichen Offset-Wert d einzuführen, mit dem die Werte in einen günstigen Bereich verschoben werden. Die die Abbildungsvorschrift T festlegenden Gewichtungsfaktoren $w_r$, $w_g$, $w_b$ sowie der Offset-Wert d werden in ihrer Gesamtheit auch als Ziel-Parameter bezeichnet. Insgesamt kann man mit den Gewichtungsfaktoren $w_r$, $w_g$, $w_b$, sowie dem Offset-Wert d folgende Abbildungsvorschrift T erstellen:

$$I[x,y] = T(B_r[x,y], B_g[x,y], B_b[x,y]) = w_r \cdot B_r[x,y] + w_g \cdot B_g[x,y] + w_b \cdot B_b[x,y] + d \, .$$

Angewandt auf die Pixel des Farbbilds (B) erhält man bei entsprechender Wahl der Parameter $w_r$, $w_g$, $w_b$ und d ein für eine Text- oder Symbolerkennung (OCR) gut geeignetes Graustufenbild I.

Die pixelweise Berechnung der Graustufenwerte I[x,y] ist recht einfach und kann von einer breiten Palette von Mikrochips rasch und effizient durchgeführt werden. Stellvertretend seien hier FPGA und DSP genannt. Häufig besteht jedoch das Problem, optimale Zielparameter $w_r$, $w_g$, $w_b$, d zu finden. Die Eingabe dieser Zielparameter kann beispielsweise über Schieberegler und/oder Eingabefelder per Tastatur einzeln erfolgen, wobei sich der Benutzer dann anhand eines oder mehrerer Referenzbilder R das jeweils resultierende Graustufenbild I anzeigen lassen kann, um den Effekt der Abbildungsvorschrift T auf das Referenzbild R zu beobachten. Auch wenig erfahrene Benutzer können zwar beurteilen, ob das resultierende Graustufenbild I gut für OCR geeignet ist, aber es ist extrem schwierig, gleichzeitig vier Zielparameter $w_r$, $w_g$, $w_b$, d so einzustellen, dass überhaupt brauchbare Vorschläge herauskommen. Die Suche nach vier Parameterwerten entspricht der Suche nach einem optimalen Punkt in einem vier-dimensionalen Raum. Eine systematische Suche, die den ganzen Raum in kleinen Schritten durchsucht, wäre sehr zeitaufwendig. Zwar kann man aufgrund der vorliegenden Farben und durch Überlegungen den Suchbereich etwas einschränken, aber dies erfordert einiges Fachwissen und wäre immer noch sehr aufwendig.

Aufgabe der Erfindung ist es, eine Eingabevorrichtung und ein Eingabeverfahren zu schaffen, das auch einem wenig erfahrenen Benutzer erlaubt, schnell zu einem guten Ergebnis, also geeigneten Werten für die Zielparametern $w_r$, $w_g$, $w_b$, d zu gelangen. Dabei hängt vom Referenzbild ab, welche Zielparameter geeignet sind.

Die Erfindung löst diese Aufgabe bei einem Verfahren der eingangs genannten Art mit dem kennzeichnenden Merkmal des Anspruches 1. Erfindungsgemäß ist bei einem Verfahren zur Auswahl einer Abbildungsvorschrift T zur pixelweisen Transformation eines dreikanaligen Farbbilds eines aufgenommenen Gegenstands in ein diesen Gegenstand repräsentierendes Graustufenbild, vorgesehen, dass

ein dreikanaliges Referenzbild R eines Referenzgegenstands ausgewählt und vorgegeben wird,

- ein Helligkeitsregler zur Auswahl eines Helligkeitswerts angeboten wird,
- ein Kontrastregler zur Auswahl eines Kontrastwerts angeboten wird,
- ein Farbwinkelregler für die Auswahl von zwei Farbwinkelwerten angeboten wird,
- ein Helligkeitswert m, ein Kontrastwert s und zwei Farbwinkelwerte $\vartheta$ und $\varphi$ ausgewählt werden,
- ausgehend von den beiden ausgewählten Farbwinkelwerten vorläufige Gewichtungsfaktoren wie folgt festgelegt werden:

$$w_r' = \sin \vartheta \cdot \cos \varphi ,$$

$$w_g' = \sin \vartheta \cdot \sin \varphi ,$$

$$w_b' = \cos \vartheta ,$$

- eine Hilfs-Transformation wie folgt festgelegt wird:

$$T'(r,g,b) = w_r' \cdot r + w_g' \cdot g + w_b' \cdot b,$$

- aus dem dreikanaligen Referenzbild R mit den Farbwerten $R_r[x,y]$, $R_g[x,y]$, $R_b[x,y]$ an den jeweiligen Koordinaten durch pixelweise Anwendung der Hilfs-Transformation ein Hilfs-Graustufenbild mit folgenden Graustufenwerten ($J[x,y]$) erstellt wird:

$$J[x,y] = T'(R_r[x,y], R_g[x,y], R_b[x,y]) ,$$

- der Mittelwert M und die Standardabweichung S der Graustufenwerte ($J[x,y]$) des Hilfs-Graustufenbilds ermittelt werden,
- Gewichtungsfaktoren wie folgt festgelegt werden:

$$w_r = w_r' \cdot s/S,$$

$$w_g = w_g' \cdot s/S,$$

$$w_b = w_b' \cdot s/S,$$

- ein Offset-Wert wie folgt festgelegt wird:

$$d = m - M ,$$

und

- die Abbildungsvorschrift T wie folgt festgelegt wird:

$$T(r,g,b) = w_r \cdot r + w_g \cdot g + w_b \cdot b + d \, .$$

Eine vorteilhafte Prüfung von Gegenständen, insbesondere Banknoten sieht vor, dass die Gewichtungsfaktoren $w_r$, $w_g$ und $w_b$ sowie der Offset-Wert d an eine Prüfeinheit übertragen werden,
dass die Prüfeinheit zumindest ein Farbbild zumindest eines Gegenstands erstellt und dass die durch die Gewichtungsfaktoren $w_r$, $w_g$, $w_b$ sowie den Offset-Wert d festgelegte Abbildungsvorschrift T auf zumindest einem Teil der Pixel dieses Farbbilds angewendet wird und derart ein Graustufenbild I für den Gegenstand erstellt wird, und
dass gegebenenfalls in zumindest einem Teil des Graustufenbildes I eine Text- und/oder Symbolerkennung vorgenommen wird.

Besonders vorteilhaft und effizient kann vorgesehen sein, dass die Prüfeinheit zur Ausführung der Abbildungsvorschrift T eine Fixkomma-Recheneinheit aufweist, deren Verarbeitungsbreite beschränkt ist und aufgrund dieser Beschränkung die zulässigen Werte für die Gewichtungsfaktoren innerhalb, insbesondere durch die Verarbeitungsbreite der Prüfungseinheit vorgegebener, zulässiger Grenzen liegen, und
dass für den Fall, dass durch die Auswahl eines Helligkeitswerts und eines Kontrastwerts oder durch die Auswahl der Farbwinkelwerte einer der Gewichtungsfaktoren außerhalb der zulässigen Grenzen liegt, die Erstellung der Abbildungsvorschrift verweigert wird.

Eine einfache, Fehler vermeidende Eingabe sieht vor, dass die Auswahl der Farbwinkelwerte über die Auswahl eines Punkts innerhalb eines zweidimensionalen Feldes im Farbwinkelregler mit vorgegebenen Grenzen vorgenommen wird, wobei für jede mögliche Auswahl von Farbwinkelwerten abhängig vom jeweils gewählten Helligkeits- und Kontrastwert untersucht wird, ob bei der jeweils gewonnenen Abbildungsvorschrift T die Gewichtungsfaktoren innerhalb der zulässigen Grenzen liegen und widrigenfalls die jeweilige Position im zweidimensionalen Feld als nicht auswählbar markiert wird und/oder die jeweilige Farbwinkelauswahl nicht zugelassen wird.

Eine Korrektur, die eine Anpassung an die Gegebenheiten der Prüfeinheit ermöglicht, sieht vor, dass für den Fall, dass einer der Gewichtungsfaktoren außerhalb der zulässigen Grenzen zu liegen käme, die Berechnung der Gewichtungsfaktoren erneut durchgeführt wird, wobei der der Kontrastwert automatisch so stark reduziert wird, dass alle der erneut berechneten Gewichtungsfaktoren innerhalb der zulässigen Grenzen liegen.

Eine weitere vorteilhafte Anpassung an die Gegebenheiten der Prüfeinheit sieht vor, dass für den Fall, dass einer oder mehrere der Gewichtungsfaktoren außerhalb der zulässigen Grenzen zu liegen käme, diese Gewichtungsfaktoren auf die zulässigen Grenzen beschränkt werden, indem jeder die untere zulässige Grenze unterschreitender Gewichtungsfaktor-Wert durch die untere zulässige Grenze und jeder die obere zulässige Grenze überschreitender Gewichtungsfaktor-Wert durch die obere zulässige Grenze ersetzt wird.

Um die auf die zulässigen Grenzen abgeschnittenen Gewichtungsfaktoren zu übernehmen, kann vorgesehen sein, dass eine Abschneide-Taste zur Betätigung zur Verfügung gehalten und bei deren Betätigung einerseits das Abschneiden der Gewichtungsfaktoren auf die zulässigen Grenzen durch den Benutzer bestätigt wird und andererseits durch Rückrechnung der Helligkeitswert m, der Kontrastwert s und die Farbwinkelwerte $\vartheta$ und $\varphi$ derart bestimmt und automatisch eingestellt werden, dass die Gewichtungsfaktoren ohne Abschneiden zu müssen auf die zulässige Grenzen beschränkt bleiben.

Um bei Irrtümern des Benutzers zu einem allgemeinen Ausgangspunkt zurückkehren zu können und die Suche nach passenden Parametern neu beginnen zu können, kann vorgesehen sein, dass eine Default-Taste zur Betätigung angeboten wird und bei ihrer Betätigung vordefinierte Werte für den Helligkeitswert, den Kontrastwert und die Farbwinkelwerte oder den daraus berechneten Gewichtungsfaktoren und den Offset-Wert aus einer Speichereinheit geladen und eingestellt werden.

Um günstig erscheinende Sätze von Parametern für eine Abbildungsvorschrift T abspeichern und zur Verfügung halten zu können, kann vorgesehen sein, dass eine Speicher-Taste zur Betätigung angeboten wird, und bei Betätigung der Speicher-Taste der Helligkeitswert, der Kontrastwert und die Farbwinkelwerte oder die daraus berechneten Gewichtungsfaktoren und der Offset-Wert in einer Speichereinheit gespeichert werden und für einen weiteren Abruf zur Verfügung gehalten werden.

Um zu den zuletzt gespeicherten Parametern zurückkehren zu können, kann vorgesehen sein, dass eine Reset-Taste zur Betätigung angeboten wird und bei Betätigung der Reset-Taste der Helligkeitswert, der Kontrastwert und die Farbwinkelwerte oder die daraus berechneten Gewichtungsfaktoren und der Offset-Wert aus der Speichereinheit geladen werden.

Um dem Benutzer ein visuelles Feedback über die Auswirkungen seiner Wahl geben zu können, kann vorgesehen sein, dass nach einer erfolgten Auswahl eines Helligkeitswerts, eines Kontrastwerts oder eines Farbwinkelwerts jeweils die Abbildungsvorschrift pixelweise auf das Referenzbild R angewendet wird, wobei ein Vorschau-Graustufenbild erhalten und angezeigt wird.

Um eine automatische Korrektur zur Vermeidung von Gewichtungsfaktoren außerhalb der zulässigen Grenzen wahlweise zuschalten oder abschalten zu können, kann vorgesehen sein, dass ein Modus-Schalter zur Auswahl eines von zwei vorgegebenen Modi angeboten wird, wobei

- bei Auswahl des ersten Modus die eingestellte Abbildungsvorschrift T basierend auf dem mittels des Helligkeitsreglers eingestellten Helligkeitswert, dem mittels des Kontrastreglers eingestellten Kontrastwerts und der mittels des Farbwinkelreglers eingestellten Farbwinkelwerte auch bei Überschreitung von zulässigen Grenzen für die Gewichtungsfaktoren ohne erneute Ermittlung angezeigt wird, und
- bei Auswahl des zweiten Modus die Abbildungsvorschrift T erneut ermittelt und angezeigt wird, wenn die Gewichtungsfaktoren die zulässigen Grenzen überschreiten.

Weiters betrifft die Erfindung auch eine Vorrichtung zur Auswahl einer Abbildungsvorschrift T gemäß Patentanspruch 7.

Bei einer Vorrichtung zur Auswahl einer Abbildungsvorschrift T zur pixelweisen Transformation eines dreikanaligen Farbbilds eines aufgenommenen Gegenstands in ein diesen Gegenstand repräsentierendes Graustufenbild sind vorgesehen:

- eine Steuerungseinheit, mit der ein dreikanaliges Referenzbild R eines Referenzgegenstands auswählbar ist,
- einen Helligkeitsregler zur Auswahl eines Helligkeitswerts,
- einen Kontrastregler zur Auswahl eines Kontrastwerts,
- einen Farbwinkelregler zur Auswahl von zwei Farbwinkelwerten,
- wobei der ausgewählte Helligkeitswert m, der ausgewählte Kontrastwert s und die zwei ausgewählten Farbwinkelwerte $\vartheta$ und $\varphi$ der Steuerungseinheit zugeführt sind,
- wobei die Steuerungseinheit ausgehend von den beiden ausgewählten Farbwinkelwerten vorläufige Gewichtungsfaktoren ($w_r'$, $w_g'$, $w_b'$) wie folgt festlegt:

$$w_r' = \sin \vartheta \cdot \cos \varphi \,,$$

$$w_g' = \sin \vartheta \cdot \sin \varphi \,,$$

$$w_b' = \cos \vartheta \,,$$

- wobei die Steuerungseinheit eine Hilfs-Transformation T' wie folgt festlegt:

$$T'(r,g,b) = w_r' \cdot r + w_g' \cdot g + w_b' \cdot b,$$

- wobei die Steuerungseinheit aus dem dreikanaligen Referenzbild R mit den Farbwerten $R_r[x,y]$, $R_g[x,y]$, $R_b[x,y]$ an den jeweiligen Koordinaten x, y durch pixelweise Anwendung der Hilfs-Transformation T' ein Hilfs-Graustufenbild J mit folgenden Graustufenwerten J[x,y] erstellt:

$$J[x,y] = T'(R_r[x,y], R_g[x,y], R_b[x,y]) \,,$$

- wobei die Steuerungseinheit den Mittelwert M und die Standardabweichung S der Graustufenwerte J[x,y] des Hilfs-Graustufenbilds ermittelt und dabei die Gewichtungsfaktoren $w_r$, $w_g$, $w_b$ sowie den Offset-Wert d wie folgt bestimmt:

$$w_r = w_r' \cdot s/S,$$

$$w_g = w_g{}' \cdot s/S,$$

$$w_b = w_b{}' \cdot s/S,$$

$$d = m - M,$$

- wobei die Steuerungseinheit die Abbildungsvorschrift T wie folgt bestimmt:

$$T(r,g,b) = w_r \cdot r + w_g \cdot g + w_b \cdot b + d.$$

und die die Abbildungsvorschrift T bestimmenden Zielparameter $w_r$, $w_g$, $w_b$ und d zur Verfügung gehalten werden.

Vorteilhafte Weiterbildungen der Erfindung sind in den abhängigen Patentansprüchen näher dargestellt.

Ein Programm zur Durchführung eines erfindungsgemäßen Verfahrens kann vorteilhafterweise auf einem Datenträger abgespeichert werden.

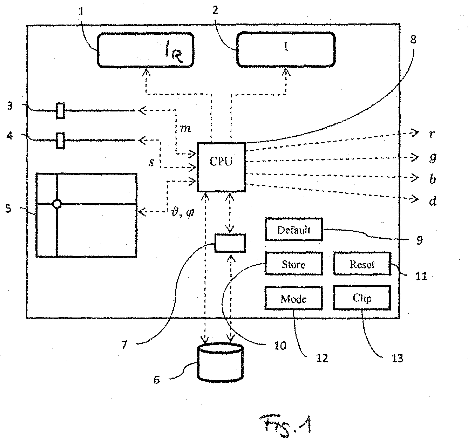

Ein bevorzugtes Ausführungsbeispiel der Erfindung ist in der Fig. 1 näher dargestellt. In Fig. 1 ist eine Eingabevorrichtung dargestellt, die es erlaubt, schnell und einfach für die jeweilige Anwendung optimale Werte für die Zielparameter $w_r$, $w_g$, $w_b$, d zu finden. Sie umfasst eine Farbbildanzeige 1, die ein vom Benutzer ausgewähltes Referenzbild R zeigt, eine Graustufenbildanzeige 2 als Vorschau für das mittels der Abbildungsvorschrift T zu erzeugende Graustufenbild I, einen Helligkeitsregler 3, mit dem die gewünschte mittlere Helligkeit m des zu erzeugenden Graustufenbildes I erstellbar ist, einen Kontrastregler 4 mit dem der gewünschte Kontrast s des Graustufenbildes I erstellbar ist und einen Farbwinkelregler 5, mit dem Farbwinkelwerte $\vartheta$ und $\varphi$ erstellbar sind. Die gewünschte Helligkeit m, der gewünschte Kontrast s und die beiden Farbwinkelwerte $\vartheta$ und $\varphi$ werden gemeinsam als Stellparameter bezeichnet. Daraus werden zunächst die vorläufigen Gewichtungsfaktoren $w_r{}'$, $w_g{}'$, $w_b{}'$ wie folgt ermittelt:

$$w_r{}' = \sin \vartheta \cdot \cos \varphi,$$

$$w_g{}' = \sin \vartheta \cdot \sin \varphi,$$

$$w_b{}' = \cos \vartheta.$$

Der Farbwinkelwert $\vartheta$ stellt einen Polarwinkel mit dem Wertebereich 0 bis $\pi$ dar, der Farbwinkelwert $\varphi$ stellt einen Azimutwinkel mit dem Wertebereich $-\pi$ bis $\pi$ dar. Die Farbwinkelwerte $\vartheta$ und $\varphi$ beschreiben in einem 3-dimensinalen Raum eine Raum-Richtung. Der durch die vorläufigen Gewichtungsfaktoren $w_r{}'$, $w_g{}'$, $w_b{}'$ beschriebene Raumpunkt liegt auf der Einheitskugel.

Mit den vorläufigen Gewichtungsfaktoren $w_r{}'$, $w_g{}'$, $w_b{}'$ wird eine Hilfs-Transformation T' in der folgenden Form bestimmt:

$$T'(r,g,b) = w_r{}' \cdot r + w_g{}' \cdot g + w_b{}' \cdot b$$

Unter Anwendung der Hilfs-Transformation T' wird ein Hilfs-Graustufenbild J erstellt, in dem die einzelnen Farbwerte $R_r[x,y]$, $R_g[x,y]$ und $R_b[x,y]$ des ausgewählten Referenzbildes R an der Bildposition x, y mit den vorläufigen Gewichtungsfaktoren $w_r{}'$, $w_g{}'$, $w_b{}'$ wie folgt verknüpft werden:

$$J[x,y] = T'(R_r[x,y], R_g[x,y], R_b[x,y])$$

Dann werden von diesem Hilfs-Graustufenbild J der Mittelwert M als Helligkeit und die Standardabweichung S als Kontrast ermittelt. Die Formel für den Mittelwert M der Helligkeitswerte $J[x,y]$ lautet:

$$M = \text{mean}(J) = (\Sigma_{x,y} J[x,y]) / n \, ,$$

wobei n die Anzahl der Pixel des Hilfs-Graustufenbildes J ist. Die Formel für die Standardabweichung S lautet:

$$S = \text{stddev}(J) = ((\Sigma_{x,y} J[x,y])^2 - (\Sigma_{x,y} J[x,y])^2 / n) / (n-1))^{1/2} \, .$$

Danach werden basierend auf den vorläufigen Gewichtungsfaktoren $w_r'$, $w_g'$, $w_b'$ durch Streckung die Gewichtungsfaktoren $w_r$, $w_g$, $w_b$ derart ermittelt, dass sich in dem basierend auf der Transformation des gewählten Referenzbildes R erstellten Graustufenbild I der gewünschte Kontrast s einstellt:

$$w_r = w_r' \cdot s/S \, ,$$

$$w_g = w_g' \cdot s/S \, ,$$

$$w_b = w_b' \cdot s/S \, .$$

Weiters wird der Offset-Wert d so berechnet, dass das basierend auf der Transformation des gewählten Referenzbildes R erstellte Graustufenbild I die vom Benutzer eingestellte gewünschte mittlere Helligkeit m besitzt:

$$d = m - M \, .$$

Es ergibt sich dann eine Abbildungsvorschrift T der Form

$$T(r,g,b) = w_r \cdot r + w_g \cdot g + w_b \cdot b + d \, .$$

Bei jeder Änderung der Eingabe für die Stellparameter m, s, $\vartheta$, $\varphi$ werden die Parameter $w_r$, $w_g$, $w_b$ und d berechnet und das daraus resultierende Graustufenbild I erzeugt. Mit dem so erstellten Graustufenbild I wird die Graustufenbildanzeige 2 aktualisiert. Diese Berechnungen werden von einer Steuerungseinheit 8 durchgeführt. Die Referenzbilder R sind dabei in einer Speichereinheit 6 abgelegt und werden vom Benutzer mittels der Kontrolleinheit 7 zur Auswahl des gewünschten Referenzbildes R ausgewählt.

Der Vorteil dieser Eingabevorrichtung liegt darin, dass der Benutzer zunächst die gewünschte Helligkeit m und den gewünschten Kontrast s des resultierenden Graustufenbildes I festlegen kann, um sich dann auf die schwieriger einzustellenden Farbwinkelwerte $\vartheta$ und $\varphi$ zu konzentrieren. Wenn er nur die Farbwinkelwerte $\vartheta$ und $\varphi$ verstellt, bleiben die eingestellte Helligkeit m und der eingestellte Kontrast s erhalten, was eine gute Vergleichbarkeit der Graustufenbilder I ermöglicht. Wenn man hingegen einen der Zielparameter $w_r$, $w_g$, $w_b$, d direkt verstellen würde, so würden im Allgemeinen auch die Helligkeit m und der Kontrast s geändert werden, was einen Bildvergleich sehr schwierig macht.

Die Farbbildanzeige 1 und die Graustufenbildanzeige 2 können als eigene Bildschirme oder als Bildschirmteile eines gemeinsamen Bildschirms ausgeführt sein.

Der Helligkeitsregler 3 und der Kontrastregler 4 können als mechanische Schieberegler oder als Bildschirm-Schieberegler, wie sie als gebräuchliche Steuerelemente am Computer verwendet werden, ausgeführt sein. Zusätzlich oder alternativ kann jeweils auch ein Eingabe- und/oder Ausgabefeld vorgesehen sein, mit dem der zugehörige Zahlenwert mittels einer Tastatur eingegeben und/oder am Bildschirm angezeigt werden kann.

Der Farbwinkelregler 5 dient zur gleichzeitigen Justierung der beiden Farbwinkelwerte $\vartheta$, $\varphi$. Dafür eignet sich ein Grafiktablett oder ein berührungsempfindlicher Bildschirm. Alternativ kann am Computer ein zweidimensionaler Schieberegler verwendet werden. Die Eingabe erfolgt dann indirekt durch das zugehörige Computereingabegerät, d.h. eine Maus, ein Trackball, ein Touchpad oder ähnliches.

Die Speichereinheit 6 dient zum Abspeichern von Referenzbildern R und optional von zusätzlichen Beispielbildern, anhand derer die ermittelten Zielparameter $w_r$, $w_g$, $w_b$, d getestet werden können. Weiters können in der Speichereinheit 6 auch die ermittelten Zielparameter $w_r$, $w_g$, $w_b$, d sowie auch die vom Benutzer eingestellten Stellparameter

m, s, $\vartheta$, $\varphi$ abgespeichert werden.

Die Kontrolleinheit 7 dient dazu, eines dieser Bilder auszuwählen. Sie kann z.B. durch einen Computerdialog, mit dem man einen Dateinamen auswählt und/oder durch Tasten zum Vor- und Zurückschalten realisiert sein.

Üblicherweise wird das Referenzbild R, mit dem die Abbildung der Stellparameter m, $\vartheta$ und $\varphi$ auf die Zielparameter $w_r$, $w_g$, $w_b$ und d erfolgt, konstant gehalten. Die Kontrolleinheit 7 wird meist nur verwendet, um die Wirkung einer auf den Zielparametern $w_r$, $w_g$, $w_b$, d basierenden Abbildungsvorschrift T auf verschiedene Beispielbilder zu testen, ohne die Parameter direkt zu beeinflussen. Erst wenn eine grundlegend andere Aufgabe verfolgt wird - z.B. die Seriennummer einer anderen Banknotenkategorie zu lesen - wird ein neues Referenzbild R geladen und dazu verwendet, die Abbildung der Parametern m, s, $\vartheta$ und $\varphi$ auf die Parameter $w_r$, $w_g$, $w_b$ und d zu berechnen.

Für die Steuerungseinheit 8 wird vorzugsweise ein moderner handelsüblicher Mikroprozessor verwendet. Sie empfängt ein Farbbild von der Speichereinheit 6 bzw. der Kontrolleinheit 7. Vom Helligkeitsregler 3 erhält sie die gewünschte Helligkeit m und vom Kontrastregler 4 erhält sie den gewünschten Kontrast s. Vom Farbwinkelregler 5 erhält sie die Farbwinkelwerte $\vartheta$ und $\varphi$. Aus diesen Werten berechnet die Steuerungseinheit 8 die zugehörigen Werte für die Zielparameter $w_r$, $w_g$, $w_b$, d, sowie - darauf basierend - das Graustufenbild I. Das Referenzbild R wird an die Farbbildanzeige 1 weitergeleitet und dort dargestellt. Das zugehörige berechnete Graustufenbild I wird an die Graustufenbildanzeige 2 weitergeleitet und dort dargestellt. Auf Änderungen, sei es beim Referenzbild R oder bei den Stellparametern m, s, $\vartheta$, $\varphi$ wird sofort reagiert, indem neue Werte für die Parameter $w_r$, $w_g$, $w_b$, d ermittelt werden und darauf basierend ein neues Graustufenbild I berechnet, an die Graustufenbildanzeige 2 weitergeleitet und von dieser dargestellt wird.

Die jeweils zuletzt berechneten Zielparameter $w_r$, $w_g$, $w_b$, d werden zur weiteren Verwendung zur Verfügung gehalten. Optional können Anzeigefelder vorgesehen sein, um die Werte anzuzeigen.

Der Farbwinkelregler 5 kann quadratisch oder rechteckig ausgeführt sein. Dabei tritt aufgrund der gewählten Berechnungsvorschrift der Zielparameter $w_r$, $w_g$, $w_b$, d in Abhängigkeit der Farbwinkelwerte $\vartheta$, $\varphi$ ein unangenehmer Darstellungseffekt auf, der auch bei der Darstellung der Erdoberfläche in einer ebenen Karte auftritt: Die an sich punktförmigen Pole der Abbildung werden durch diese auf den gesamten oberen bzw. unteren Rand abgebildet. Praktisch bedeutet das bei einem rechteckigen Farbwinkelregler 5, dass sich die berechneten Zielparameter $w_r$, $w_g$, $w_b$, d nicht ändern, wenn man den Regler nur am oberen bzw. unteren Rand hin- und herschiebt, das heißt bei einem Polarwinkel $\vartheta$ von 0 oder $\pi$ hat die Wahl des Azimutwinkels $\varphi$ keinen Einfluss auf die Abbildungsvorschrift T. Es ist daher vorteilhaft, den Farbwinkelregler 5 elliptisch auszuführen. Der zulässige Bereich wird also horizontal entsprechend gestaucht. Die Stauchung ist umso größer, je näher der obere bzw. untere Rand ist. Dadurch kann erreicht werden, dass Änderungen der Einstellung des Farbwinkelreglers 5 auch tatsächlich immer zu eine Änderung der Zielparameter $w_r$, $w_g$, $w_b$, d führen und dass die Sensibilität des Farbwinkelregler 5 in allen Bereichen annähernd gleich ist.

Es kann passieren, dass sich bei der Berechnung des Graustufenbildes I für einige Pixel fiktive Grauwerte ergeben, die sich außerhalb des zulässigen oder darstellbaren Bereichs befinden. Diese werden dann auf den erlaubten Wertebereich eingeschränkt. Bei einem erlaubten Wertebereich von 0 bis 255 bedeutet das z.B., dass negative Werte durch 0 und Werte über 255 durch 255 ersetzt werden.

Weiters kann der Fall eintreten, dass die Zielparameter $w_r$, $w_g$, $w_b$, d wertmäßig beschränkt sind. Die Zielparameter werden z.B. von FPGAs von Prüfungseinheiten bei der Prüfung von Bildern B von Gegenständen benutzt. Die Verwendung größerer Wertebereiche würde gerade bei Verfahren zur raschen Prüfung großer Datenmengen größere Kosten verursachen. Zur Berücksichtigung dieser Wertebereich-Einschränkung gibt es bei der Berechnung des Graustufenbildes I zwei Möglichkeiten. Es kann entweder mit den uneingeschränkten, aber später nicht verwendbaren Zielparametern $w_r$, $w_g$, $w_b$, d gerechnet werden, wodurch die Graustufenbilder gut vergleichbar bleiben oder es können die Zielparameter $w_r$, $w_g$, $w_b$, d immer automatisch auf den nächstgelegenen erlaubten Wert gesetzt oder gerundet werden. Letzteres hat den Vorteil, dass das angezeigte Graustufenbild I später auch tatsächlich erreicht werden kann, birgt aber den Nachteil, dass dadurch die Helligkeit m und der Kontrast s nicht immer konstant gehalten werden können, wenn man mit dem Farbwinkelregler 5 die Farbwinkelwerte $\vartheta$ und $\varphi$ verstellt. Bei der anderen Lösung muss der Benutzer selbst den Helligkeitsregler 3 und den Kontrastregler 4 so verstellen, dass verwendbare Zielparametern $w_r$, $w_g$, $w_b$, d entstehen. Es kann ein Modus-Schalter 12 vorgesehen werden, mit dem zwischen den beiden Alternativen gewechselt werden kann.

Es kann vorgesehen sein, dass die berechneten Zielparameter $w_r$, $w_g$, $w_b$, d laufend angezeigt werden. Es kann auch vorgesehen sein, dass die Zielparameter $w_r$, $w_g$, $w_b$, d über Eingabefelder und/oder Schieberegler direkt einstellbar sind.

Für den Fall, dass zwar die berechneten Zielparameter $w_r$, $w_g$, $w_b$, d angezeigt, aber nur solche Graustufenbilder I dargestellt werden, die auf die erlaubten Wertebereiche der Zielparameter $w_r$, $w_g$, $w_b$, d Rücksicht nehmen, kann eine Abschneide-Taste 13 vorgesehen sein. Wenn diese gedrückt wird, werden die bereits eingeschränkten Zielparameter $w_r$, $w_g$, $w_b$, d akzeptiert und die zugehörigen Stellparameter m, s, $\vartheta$ und $\varphi$ durch Rückrechnung bestimmt. Der Helligkeitsregler 3, der Kontrastregler 4 und der Farbwinkelregler 5 werden dann automatisch entsprechend verstellt. Diese Vorgangsweise erlaubt es dem Benutzer, die in der Graustufenbildanzeige 2 dargestellte Variante zu übernehmen.

Es kann eine Default-Taste 9 vorgesehen sein. Bei deren Betätigung werden vordefinierte Werte für die Ziel-

parameter $w_r$, $w_g$, $w_b$, d und die Stellparameter m, s, $\vartheta$, $\varphi$ eingestellt. Die Farbbildanzeige 1, die Graustufenbildanzeige 2, sowie der Helligkeitsregler 3, der Kontrastregler 4 und der Farbwinkelregler 5 werden dann gesteuert durch die Steuerungseinheit 8 entsprechend eingestellt. Damit kann zu einem allgemeinen Ausgangspunkt zurückgekehrt werden, um die Suche nach passenden Parametern neu zu beginnen.

Es kann eine Speicher-Taste 10 vorgesehen sein, mit der die aktuell eingestellten Stellparameter m, s, $\vartheta$, $\varphi$ oder die daraus berechneten Zielparameter $w_r$, $w_g$, $w_b$, d in der Speichereinheit 6 oder in einem weiteren Speicher gespeichert werden. Damit können günstig erscheinende Sätze von Stell- und Zielparametern für eine Abbildungsvorschrift T gespeichert werden. Es kann auch vorgesehen sein, dass nur im Falle einer Betätigung der Speicher-Taste 10 die berechneten Zielparameter $w_r$, $w_g$, $w_b$, d nach außen weitergegeben werden.

Es kann eine Reset-Taste 11 vorgesehen sein, mit der die zuletzt gespeicherten Stell- und Zielparameter wiederhergestellt werden. Damit kann zu den zuletzt günstig erscheinenden Stell- und Zielparametern zurückgekehrt werden.

Nachdem die multiplikativen Gewichtungsfaktoren $w_r$, $w_g$, $w_b$ sowie der Offset-Wert d erstellt wurden, werden diese an eine Prüfeinheit übertragen, die ein Farbbild eines zu untersuchenden Gegenstands erstellt und die Abbildungsvorschrift T auf die Pixel des Farbbilds B des Gegenstands separat anwendet. Durch Anwendung dieser Abbildungsvorschrift T wird ein Graustufenbild I, wie eingangs beschrieben, erstellt. Zumindest ein Teil des Graustufenbilds I wird einer Text- oder Symbolerkennung zugeführt und der jeweils erkannte Text bzw. die jeweils erkannten Symbole werden zur weiteren Verarbeitung zur Verfügung gehalten. Üblicherweise weist die Prüfeinheit zur Ausführung der Abbildungsvorschrift T Speicher bzw. Register für die die Abbildungsvorschrift T festlegenden Zielparameter sowie eine oder mehrere Fixkommarecheneinheiten auf, die auf einen bestimmten maximalen Wertebereich beschränkt bzw. ausgelegt sind. Aufgrund dieser Beschränkung liegen die zulässigen Gewichtungsfaktoren $w_r$, $w_g$, $w_b$ innerhalb zulässiger Grenzen $w_{min}$, $w_{max}$. Ein typisches Beispiel ist $w_{min}$ = -256/128 und $w_{max}$ = +255/128. Das entspricht einem Wertebereich von -2 bis knapp unter +2 bei 9 Bit Gesamtlänge mit 7 Bit Nachkommastellen.

Für den Fall, dass durch die Auswahl eines Helligkeitswerts m und eines Kontrastwerts s oder durch die Auswahl der Farbwinkelwerte $\vartheta$ und $\varphi$ einer der Gewichtungsfaktoren $w_r$, $w_g$, $w_b$ außerhalb der zulässigen Grenzen $w_{min}$, $w_{max}$ liegt, kann die Erstellung der Abbildungsvorschrift T von der Steuerungseinheit 8 verweigert werden. Zur einfacheren Einstellung von gültigen Farbwinkelwerten $\vartheta$, $\varphi$ werden diese durch Auswahl eines Punkts innerhalb des zweidimensionalen Felds des Farbwinkelreglers 5 mit vorgegebenen Grenzen vorgenommen. Die mögliche Auswahl von Farbwinkelwerten wird dabei jeweils abhängig vom gewähltem Helligkeitswert m und gewählten Kontrast s bestimmt, wobei ermittelt wird, ob bei der jeweils gewonnenen Abbildungsvorschrift T die Gewichtungsfaktoren $w_r$, $w_g$, $w_b$ innerhalb der zulässigen Grenzen $w_{min}$, $w_{max}$ liegen. Widrigenfalls wird die jeweilige Position im zweidimensionalen Feld als nicht auswählbar, z.B. farblich, markiert. Es ist auch zusätzlich oder stattdessen möglich, dass die jeweilige Farbwinkelauswahl nicht zugelassen wird, wobei hierbei dem Benutzer auch eine entsprechende Fehlermeldung gegeben werden kann. In diesem Zusammenhang besteht auch die Möglichkeit einer einfachen Korrektur, wobei für den Fall, dass einer der Gewichtungsfaktoren $w_r$, $w_g$, $w_b$ außerhalb der zulässigen Grenzen $w_{min}$ $w_{max}$ liegt, der auszuwählende Kontrastwert s derart reduziert und die Berechnung der Gewichtungsfaktoren $w_r$, $w_g$, $w_b$ wiederholt wird, dass die Gewichtungsfaktoren $w_r$, $w_g$, $w_b$ innerhalb der zulässigen Grenzen $w_{min}$, $w_{max}$ liegen.

**Patentansprüche**

1. Verfahren zur Auswahl einer Abbildungsvorschrift (T) zur pixelweisen Transformation eines dreikanaligen Farbbilds (B) eines aufgenommenen Gegenstands (14) in ein diesen Gegenstand (14) repräsentierendes Graustufenbild (I), wobei ein dreikanaliges Referenzbild (R) eines Referenzgegenstands (15) ausgewählt und vorgegeben wird,

    - wobei ein Helligkeitsregler (3) zur Auswahl eines Helligkeitswerts (m) angeboten wird,
    - wobei ein Kontrastregler (4) zur Auswahl eines Kontrastwerts (s) angeboten wird,
    - wobei ein Farbwinkelregler (5) zur Auswahl von zwei Farbwinkelwerten ($\vartheta$, $\varphi$) angeboten wird,
    - wobei ein Helligkeitswert m, ein Kontrastwert s, und zwei Farbwinkelwerte $\vartheta$ und $\varphi$ ausgewählt werden,
    - wobei ausgehend von den beiden ausgewählten Farbwinkelwerten ($\vartheta$, $\varphi$) vorläufige Gewichtungsfaktoren ($w_r'$, $w_g'$, $w_b'$) wie folgt bestimmt werden:

$$w_r' = \sin \vartheta \cdot \cos \varphi \, ,$$

$$w_g' = \sin \vartheta \cdot \sin \varphi \, ,$$

$$w_b' = \cos \vartheta \, ,$$

- wobei eine Hilfs-Transformation (T') wie folgt bestimmt wird:

$$T'(r,g,b) = w_r' \cdot r + w_g' \cdot g + w_b' \cdot b,$$

- wobei aus dem dreikanaligen Referenzbild (R) mit den Farbwerten $R_r[x,y]$, $R_g[x,y]$, $R_b[x,y]$ an den jeweiligen Koordinaten (x, y) durch pixelweise Anwendung der Hilfs-Transformation (T') ein Hilfs-Graustufenbild (J) mit folgenden Graustufenwerten (J[x,y]) erstellt wird:

$$J[x,y] = T'(R_r[x,y], R_g[x,y], R_b[x,y]) \, ,$$

- wobei der Mittelwert M und die Standardabweichung S der Graustufenwerte (J[x,y]) des Hilfs-Graustufenbilds (J) ermittelt werden,
- wobei Gewichtungsfaktoren ($w_r$, $w_g$, $w_b$) wie folgt bestimmt werden:

$$w_r = w_r' \cdot s/S,$$

$$w_g = w_g' \cdot s/S,$$

$$w_b = w_b' \cdot s/S,$$

- wobei ein Offset-Wert (d) wie folgt festgelegt wird:

$$d = m - M \, ,$$

- und wobei die Abbildungsvorschrift (T) wie folgt festgelegt wird:

$$T(r,g,b) = w_r \cdot r + w_g \cdot g + w_b \cdot b + d \, .$$

2. Verfahren nach Anspruch 1, **dadurch gekennzeichnet, dass** die Gewichtungsfaktoren $w_r$, $w_g$ und $w_b$ sowie der Offset-Wert d an eine Prüfeinheit übertragen werden,
dass die Prüfeinheit zumindest ein Farbbild (B) zumindest eines Gegenstands erstellt und
dass die durch die Gewichtungsfaktoren $w_r$, $w_g$, $w_b$ sowie den Offset-Wert d festgelegte Abbildungsvorschrift (T) auf die Pixel dieses Farbbilds (B) separat angewendet wird und derart ein Graustufenbild (I) für den Gegenstand erstellt wird, und
dass gegebenenfalls in zumindest einem Teil des Graustufenbildes (I) eine Text- und/oder Symbolerkennung vorgenommen wird.

3. Verfahren nach Anspruch 1 oder 2, **dadurch gekennzeichnet, dass** die Prüfeinheit zur Anwendung der für die Abbildungsvorschrift (T) erforderlichen Gewichtungsfaktoren ($w_r$, $w_g$, $w_b$) eine Fixkomma-Recheneinheit aufweist, deren Verarbeitungsbreite beschränkt ist und aufgrund dieser Beschränkung die zulässigen Werte für die Gewichtungsfaktoren ($w_r$, $w_g$, $w_b$) innerhalb, insbesondere durch die Verarbeitungsbreite der Prüfungseinheit vorgegebener, zulässiger Grenzen ($w_{min}$, $w_{max}$) liegen, und
dass für den Fall, dass durch die Auswahl eines Helligkeitswerts (m) oder eines Kontrastwerts (s) oder durch die Auswahl der Farbwinkelwerte ($\vartheta$, $\varphi$) einer der Gewichtungsfaktoren ($w_r$, $w_g$, $w_b$) außerhalb der zulässigen Grenzen ($w_{min}$, $w_{max}$) liegt, die Erstellung der Abbildungsvorschrift (T) verweigert wird,
wobei gegebenenfalls

**4.** Verfahren nach Anspruch 3, **dadurch gekennzeichnet,**

a) **dass** die Auswahl der Farbwinkelwerte $(\vartheta, \varphi)$ über die Auswahl eines Punkts innerhalb eines zweidimensionalen Feldes im Farbwinkelregler (5) mit vorgegebenen Grenzen vorgenommen wird, wobei für jede mögliche Auswahl von Farbwinkelwerte $\vartheta$ $(\vartheta, \varphi)$ abhängig vom jeweils gewählten Helligkeits- und Kontrastwert (m, s) untersucht wird, ob bei der jeweils gewonnenen Abbildungsvorschrift (T) die Gewichtungsfaktoren $(w_r, w_g, w_b)$ innerhalb der zulässigen Grenzen $(w_{min}, w_{max})$ liegen und widrigenfalls die jeweilige Position im zweidimensionalen Feld als nicht auswählbar markiert wird und/oder die jeweilige Farbwinkelauswahl nicht zugelassen wird, oder

b) **dass** für den Fall, dass einer der Gewichtungsfaktoren $(w_r, w_g, w_b)$ außerhalb der zulässigen Grenzen $(w_{min}, w_{max})$ zu liegen käme, die Berechnung der Gewichtungsfaktoren $(w_r, w_g, w_b)$ erneut durchgeführt wird, wobei der Kontrastwert (s), insbesondere automatisch, so stark reduziert wird, dass alle der erneut berechneten Gewichtungsfaktoren $(w_r, w_g, w_b)$ innerhalb der zulässigen Grenzen $(w_{min}, w_{max})$ liegen, oder

c) **dass** für den Fall, dass einer oder mehrere der Gewichtungsfaktoren $(w_r, w_g, w_b)$ außerhalb der zulässigen Grenzen $(w_{min}, w_{max})$ zu liegen kämen, diese Gewichtungsfaktoren $(w_r, w_g, w_b)$ auf die zulässigen Grenzen $(w_{min}, w_{max})$ beschränkt werden, indem jeder die untere zulässige Grenze $(w_{min})$ unterschreitender Gewichtungsfaktor-Wert durch die untere zulässige Grenze $(w_{min})$ und jeder die obere zulässige Grenze $(w_{max})$ überschreitender Gewichtungsfaktor-Wert durch die obere zulässige Grenze $(w_{max})$ ersetzt wird,

- wobei insbesondere eine Abschneide-Taste (13) zur Betätigung zur Verfügung gehalten wird bei deren Betätigung der Helligkeitswert (m), der Kontrastwert (s) und die Farbwinkelwerte $(\vartheta, \varphi)$ derart bestimmt und automatisch eingestellt werden, dass sich die auf die zulässigen Grenzen $(w_{min}, w_{max})$ beschränkten Gewichtungsfaktoren $(w_r, w_g, w_b)$ ergeben.

**5.** Verfahren nach einem der vorangehenden Ansprüche, **dadurch gekennzeichnet,**

a) **dass** eine Default-Taste (9) zur Betätigung angeboten wird und bei ihrer Betätigung vordefinierte Werte für die Gewichtungsfaktoren $(w_r, w_g, w_b)$ und den Offset-Wert (d) oder für den Helligkeitswert (m), für den Kontrastwert (s) und die Farbwinkelwerte $(\vartheta, \varphi)$ aus einer Speichereinheit (6) geladen und eingestellt werden, und/oder,

b) **dass** eine Speicher-Taste (10) zur Betätigung angeboten wird, und bei Betätigung der Speicher-Taste (10) der Helligkeitswert (m), der Kontrastwert (s) und die Farbwinkelwerte $(\vartheta, \varphi)$ oder die daraus berechneten Gewichtungsfaktoren $(w_r, w_g, w_b)$ und der Offset-Wert (d) in der Speichereinheit (6) oder in einem weiteren Speicher gespeichert werden und für einen weiteren Abruf zur Verfügung gehalten werden, und/oder

c) **dass** eine Reset-Taste (11) zur Betätigung angeboten wird und bei Betätigung der Reset-Taste (11) der Helligkeitswert (m), der Kontrastwert (s) und die Farbwinkelwerte $(\vartheta, \varphi)$ oder die daraus berechneten Gewichtungsfaktoren $(w_r, w_g, w_b)$ und der Offset-Wert (d) aus der Speichereinheit (6) geladen werden, und/oder

d) **dass** nach einer erfolgten Auswahl des Helligkeitswerts (m), eines Kontrastwerts (s) oder eines Farbwinkelwerts $(\vartheta, \varphi)$ die Abbildungsvorschrift (T) pixelweise auf das Referenzbild (R) angewendet wird, wobei ein Graustufenbild (I) erhalten und angezeigt wird.

**6.** Verfahren nach einem der vorangehenden Ansprüche, **dadurch gekennzeichnet, dass** ein Modus-Schalter (12) zur Auswahl eines von zwei vorgegebenen Modi angeboten wird, wobei

- bei Auswahl des ersten Modus die eingestellte Abbildungsvorschrift (T) basierend auf dem mittels des Helligkeitsreglers (3) eingestellten Helligkeitswert (m), dem mittels des Kontrastreglers (4) eingestellten Kontrastwerts (s) und der mittels des Farbwinkelreglers (5) eingestellten Farbwinkelwerte $(\vartheta, \varphi)$ auch bei Überschreitung der zulässigen Grenzen $(w_{min}, w_{max})$ für die Gewichtungsfaktoren $(w_r, w_g, w_b)$ ohne erneute Ermittlung angezeigt wird, und

- bei Auswahl des zweiten Modus die Abbildungsvorschrift (T) nach einem der Patentansprüche 5 oder 6 erneut ermittelt und angezeigt wird, wenn die Gewichtungsfaktoren $(w_r, w_g, w_b)$ die zulässigen Grenzen $(w_{min}, w_{max})$ überschreiten.

**7.** Vorrichtung zur Auswahl einer Abbildungsvorschrift (T) zur pixelweisen Transformation eines dreikanaligen Farbbilds (B) eines aufgenommenen Gegenstands (14) in ein diesen Gegenstand (14) repräsentierendes Graustufenbild (I), umfassend

- eine Steuerungseinheit (8), mit der ein dreikanaliges Referenzbild (R) eines Referenzgegenstands auswählbar ist,
- einen Helligkeitsregler (3) zur Auswahl eines Helligkeitswerts (m),
- einen Kontrastregler (4) zur Auswahl eines Kontrastwerts (s),
- einen Farbwinkelregler (5) zur Auswahl von zwei Farbwinkelwerten ($\vartheta$, $\varphi$),

wobei der ausgewählte Helligkeitswert m, der ausgewählte Kontrastwert s und die zwei ausgewählten Farbwinkelwerte $\vartheta$, $\varphi$ der Steuerungseinheit (8) zugeführt sind,
wobei die Steuerungseinheit (8) ausgehend von den beiden ausgewählten Farbwinkelwerten ($\vartheta$, $\varphi$) vorläufige Gewichtungsfaktoren ($w_r'$, $w_g'$, $w_b'$) wie folgt festlegt:

$$w_r' = \sin \vartheta \cdot \cos \varphi \, ,$$

$$w_g' = \sin \vartheta \cdot \sin \varphi \, ,$$

$$w_b' = \cos \vartheta \, ,$$

wobei die Steuerungseinheit (8) eine Hilfs-Transformation (T') wie folgt festlegt:

$$T'(r,g,b) = w_r' \cdot r + w_g' \cdot g + w_b' \cdot b,$$

wobei die Steuerungseinheit (8) aus dem dreikanaligen Referenzbild (R) mit den Farbwerten $R_r[x,y]$, $R_g[x,y]$, $R_b[x,y]$ an den jeweiligen Koordinaten (x, y) durch pixelweise Anwendung der Hilfs-Transformation (T') ein Hilfs-Graustufenbild (J) mit folgenden Graustufenwerten ($J[x,y]$) erstellt:

$$J[x,y] = T'(R_r[x,y], R_g[x,y], R_b[x,y]) \, ,$$

wobei die Steuerungseinheit (8) den Mittelwert M und die Standardabweichung S der Graustufenwerte ($J[x,y]$) des Hilfs-Graustufenbilds (J) ermittelt und dabei die Gewichtungsfaktoren ($w_r$, $w_g$ $w_b$) sowie den Offset-Wert (d) wie folgt bestimmt:

$$w_r = w_r' \cdot s/S,$$

$$w_g = w_g' \cdot s/S,$$

$$w_b = w_b' \cdot s/S,$$

$$d = m - M \, ,$$

und wobei die Steuerungseinheit (8) die Abbildungsvorschrift (T) wie folgt bestimmt:

$$T(r,g,b) = w_r \cdot r + w_g \cdot g + w_b \cdot b + d$$

und die die Abbildungsvorschrift (T) bestimmenden Zielparameter ($w_r$, $w_g$, $w_b$, d) zur Verfügung hält.

8. Vorrichtung nach Anspruch 7, **gekennzeichnet durch** eine der Steuereinheit (8) nachgeschaltete Prüfungseinheit, der die Abbildungsvorschrift (T) zugeführt ist,

wobei die Prüfeinheit bei Vorliegen der Abbildungsvorschrift (T) zumindest ein Farbbild (B) zumindest eines Gegenstands erstellt und die durch die Gewichtungsfaktoren $w_r$, $w_g$, $w_b$ sowie den Offset-Wert d festgelegte Abbildungsvorschrift (T) auf die Pixel dieses Farbbilds (B) separat anwendet und derart ein Graustufenbild (I) für den Gegenstand erstellt, und gegebenenfalls zumindest in einem Teil des Graustufenbildes (I) eine Text- und/oder Symbolerkennung vornimmt.

9. Vorrichtung nach Anspruch 7 oder 8, **dadurch gekennzeichnet, dass** die Prüfeinheit zur Ausführung der für die Abbildungsvorschrift (T) erforderlichen Gewichtungsfaktoren ($w_r$, $w_g$, $w_b$) eine Fixkomma-Recheneinheit aufweist, deren Verarbeitungsbreite beschränkt ist und aufgrund dieser Beschränkung die zulässigen Werte für die Gewichtungsfaktoren ($w_r$, $w_g$, $w_b$) innerhalb, insbesondere durch die Verarbeitungsbreite der Prüfungseinheit vorgegebener, zulässiger Grenzen ($w_{min}$, $w_{max}$) liegen.

10. Vorrichtung nach Anspruch 9, **dadurch gekennzeichnet, dass**

a) die Steuerungseinheit (8) für den Fall, dass durch die Auswahl eines Helligkeitswerts (m) oder eines Kontrastwerts (s) oder durch die Auswahl der Farbwinkelwerte ($\vartheta$, $\varphi$) einer der Gewichtungsfaktoren ($w_r$, $w_g$, $w_b$) außerhalb der zulässigen Grenzen ($w_{min}$, $w_{max}$) liegt, die Erstellung der Abbildungsvorschrift (T) verweigert,

- wobei insbesondere der Farbwinkelregler (5) die Auswahl der Farbwinkelwerte ($\vartheta$, $\varphi$) über die Auswahl eines Punkts innerhalb eines zweidimensionalen Feldes innerhalb vorgegebener Grenzen ermöglicht, und die Steuerungseinheit (8) für jede mögliche Auswahl von Farbwinkelwerten ($\vartheta$, $\varphi$) abhängig vom jeweils gewählten Helligkeits- und Kontrastwert (m, s) untersucht, ob bei der jeweils gewonnenen Abbildungsvorschrift (T) die Gewichtungsfaktoren ($w_r$, $w_g$, $w_b$) innerhalb der zulässigen Grenzen ($w_{min}$, $w_{max}$) liegen und widrigenfalls die jeweilige Position im zweidimensionalen Feld als nicht auswählbar markiert und/oder die jeweilige Farbwinkelauswahl nicht zulässt, und/oder

b) die Steuerungseinheit (8) für den Fall, dass einer oder mehrere der von ihr bestimmten Gewichtungsfaktoren ($w_r$, $w_g$, $w_b$) außerhalb der zulässigen Grenzen ($w_{min}$, $w_{max}$) zu liegen kämen, die Berechnung der Gewichtungsfaktoren ($w_r$, $w_g$, $w_b$) erneut durchführt, wobei die Steuerungseinheit (8) den Kontrastwert (s) in diesem Fall so stark reduziert, dass alle der erneut berechneten Gewichtungsfaktoren ($w_r$, $w_g$, $w_b$) innerhalb der zulässigen Grenzen ($w_{min}$, $w_{max}$) liegen, und/oder

c) die Steuerungseinheit (8) für den Fall, dass einer oder mehrere der von ihr bestimmten Gewichtungsfaktoren ($w_r$, $w_g$, $w_b$) außerhalb der zulässigen Grenzen ($w_{min}$, $w_{max}$) zu liegen kämen, die Gewichtungsfaktoren ($w_r$, $w_g$, $w_b$) auf die zulässigen Grenzen ($w_{min}$, $w_{max}$) beschränkt, indem die Steuerungseinheit (8) jeden die untere zulässige Grenze ($w_{min}$) unterschreitenden Gewichtungsfaktor-Wert durch die untere zulässige Grenze ($w_{min}$) und jeden die obere zulässige Grenze ($w_{max}$) überschreitenden Gewichtungsfaktor-Wert durch die obere zulässige Grenze ($w_{max}$) ersetzt,

- wobei insbesondere eine der Steuereinheit (8) vorgeschaltete Abschneide-Taste (13) vorgesehen ist, bei deren Betätigung die Steuereinheit (8) den Helligkeitswert (m), den Kontrastwert (s) und die Farbwinkelwerte ($\vartheta$, $\varphi$) derart bestimmt und einstellt, dass sich die auf die zulässigen Grenzen ($w_{min}$, $w_{max}$) beschränkten Gewichtungsfaktoren ($w_r$, $w_g$, $w_b$) ergeben.

11. Vorrichtung nach einem der Ansprüche 7 bis 10, **gekennzeichnet durch**

a) eine der Steuereinheit (8) vorgeschaltete Default-Taste (9), bei deren Betätigung die Steuereinheit (8) vordefinierte Werte für die Gewichtungsfaktoren ($w_r$, $w_g$, $w_b$) und den Offset-Wert (d) sowie für den Helligkeitswert (m), für den Kontrastwert (s) und die Farbwinkelwerte ($\vartheta$, $\varphi$) aus einer Speichereinheit (6) lädt und anwendet, und/oder

b) eine der Steuereinheit (8) vorgeschaltete Speicher-Taste (10), bei deren Betätigung die Steuereinheit (8) den Helligkeitswert (m), den Kontrastwert (s) und die Farbwinkelwerte ($\vartheta$, $\varphi$) oder die daraus berechneten Gewichtungsfaktoren ($w_r$, $w_g$, $w_b$) und den Offset-Wert (d) in der Speichereinheit (6) oder in einem weiteren Speicher abspeichert und gegebenenfalls für einen weiteren Abruf zur Verfügung hält, und/oder

c) eine der Steuereinheit (8) vorgeschaltete Reset-Taste (11), bei deren Betätigung die Steuereinheit (8) den Helligkeitswert (m), den Kontrastwert (s) und die Farbwinkelwerte ($\vartheta$, $\varphi$) oder die daraus berechneten Gewichtungsfaktoren ($w_r$, $w_g$, $w_b$) und den Offset-Wert (d) aus der Speichereinheit (6) lädt und anwendet.

**12.** Vorrichtung nach einem der Ansprüche 7 bis 11, **dadurch gekennzeichnet, dass** die Steuerungseinheit (8) nach einer erfolgten Auswahl eines Helligkeitswerts (m), eines Kontrastwerts (s) oder eines Farbwinkelwerts ($\vartheta$, $\varphi$) die Abbildungsvorschrift (T) pixelweise auf das Referenzbild (R) anwendet und so ein Vorschau-Graustufenbild (I) erzeugt und dieses in einer Graustufenbildanzeige (2) darstellt.

**13.** Vorrichtung nach einem der Ansprüche 7 bis 12, **gekennzeichnet durch** einen der Steuereinheit (8) vorgeschalteten Modus-Schalter (12) zur Auswahl eines von zwei vorgegebenen Modi, wobei die Steuerungseinheit (8)

- bei Auswahl des ersten Modus die eingestellte Abbildungsvorschrift (T) basierend auf dem mittels des Helligkeitsreglers (3) eingestellten Helligkeitswert (m), dem mittels des Kontrastreglers (4) eingestellten Kontrastwerts (s) und der mittels des Farbwinkelreglers (5) eingestellten Farbwinkelwerte ($\vartheta$, $\varphi$) auch bei Überschreitung der zulässigen Grenzen ($w_{min}$, $w_{max}$) für die Gewichtungsfaktoren ($w_r$, $w_g$, $w_b$) ohne erneute Ermittlung anzeigt, und
- bei Auswahl des zweiten Modus die Abbildungsvorschrift (T) nach Patentansprüche 10 erneut ermittelt und gegebenenfalls anzeigt, wenn die Gewichtungsfaktoren ($w_r$, $w_g$, $w_b$) die zulässigen Grenzen ($w_{min}$, $w_{max}$) überschreiten.

**14.** Datenträger auf dem ein Computerprogramm zur Durchführung eines Verfahrens nach einem der Ansprüche 1 bis 6 abgespeichert ist.

**Claims**

**1.** Method for selecting an imaging rule (T) for pixel-wise transformation of a three-channel color image (B) of a recorded object (14) into a grayscale image (I) representing this object (14),

- wherein a three-channel reference image (R) of a reference object (15) is selected and predetermined,
- a brightness controller (3) is provided to select a brightness value (m),
- wherein a contrast controller (4) is provided to select a contrast value (s)
- wherein a color angle controller (5) is provided to select two color angle values ($\vartheta$,$\varphi$)
- wherein a brightness value m, a contrast value s, and two color angle values $\vartheta$ and $\varphi$ are selected,
- wherein, starting from the two selected color angle values ($\vartheta$, $\varphi$), provisional weighting factors ($w_r'$, $w_g'$, $w_b'$) may be determined as follows:

$$w_r' = \sin \vartheta \cdot \cos \varphi,$$

$$w_g' = \sin \vartheta \cdot \sin \varphi,$$

$$w_b' = \cos \vartheta,$$

- wherein an auxiliary transformation (T') is determined as follows:

$$T'(r, g, b) = w_r' \cdot r + w_g' \cdot g + w_b' \cdot b,$$

- wherein a grayscale image (J) with the grayscale values (J[x.y]) given below is produced from the three-channel reference image (R) with the three color values $R_r(x,y)$, $R_g(x,y)$, $R_b[x,y]$ at the respective coordinates (x, y) by pixel-wise application of the auxiliary transformation (T'):

$$J[x,y] = T'(R_r[x,y], R_g[x,y], R_b[x,y]),$$

- wherein the mean value M and the standard deviation S of the grayscale values (J[x,y]) of the auxiliary grayscale image (J) are determined,
- wherein weighting factors ($w_r$, $w_g$, $w_b$) are determined as follows:

$$w_r = w_r' \cdot s/S,$$

$$w_g = w_g' \cdot s/S,$$

$$w_b = w_b' \cdot s/S,$$

- wherein an offset value (d) is determined as follows:

$$d = m - M,$$

- and wherein the imaging rule (T) is determined as follows:

$$T(r, g, b) = w_r \cdot r + w_g \cdot g + w_b \cdot b + d.$$

2. Method according to claim 1,
   **characterized in that**
   the weighting factors $w_r$, $w_g$ and $w_b$ as well as the offset value d are transmitted to a test unit,
   the test unit produces a color image (B) of at least one object, while the imaging rule (T) determined through the weighting factors $w_r$, $w_g$ and $w_b$ and the offset value d is applied separately to the pixels of this color image (B) to produce a grayscale image (I) for the object, and
   a text and/or symbol recognition is carried out optionally in at least one part of the grayscale image (I).

3. Method according to claim 1 or 2,
   **characterized in that**
   the test unit for applying the weighting factors ($w_r$, $w_g$, $w_b$) required for the imaging rule (T) comprises a fixed-point calculating unit, whose processing width is limited and, due to this limitation, the permissible values for the weighting factors ($w_r$, $w_g$, $w_b$) lie within permissible limits ($w_{min}$, $w_{max}$), which are, in particular, predetermined by the processing width of the test unit, and
   wherein the production of the imaging rule (T) is refused in the event of the selection of a brightness value (m) or a contrast value (s) or the selection of the color angle values ($\vartheta$, $\varphi$) of one of the weighting factors ($w_r$, $w_g$, $w_b$) lying outside the permissible limits ($w_{min}$, $w_{max}$).

4. Method according to claim 3,
   **characterized in that**

   a) the selection of the color angle values ($\vartheta$, $\varphi$) is carried out within predefined limits by means of the selection of a point within a two-dimensional field in the color angle controller (5), wherein for each possible selection of color angle values ($\vartheta$, $\varphi$), it is determined, as a function of the respectively selected brightness and contrast value (m, s), whether the weighting factors ($w_r$, $w_g$, $w_b$) are within the permissible limits ($w_{min}$, $w_{max}$) of the respective imaging rule (T) produced, wherein, failing which, the respective position in the two-dimensional field is marked as being non-selectable and/or the respective color angle selection is not permitted, or
   b) in the event that one of the weighting factors ($w_r$, $w_g$, $w_b$) lies outside the permissible limits ($w_{min}$, $w_{max}$), the calculation of the weighting factors ($w_r$, $w_g$, $w_b$) is performed again, wherein the contrast value (s) is reduced to such an extent, in particular automatically, that all of the recalculated weighting factors ($w_r$, $w_g$, $w_b$) lie within the permissible limits ($w_{min}$, $w_{max}$), or
   c) in the event that one or more of the weighting factors ($w_r$, $w_g$, $w_b$) lie(s) outside the permissible limits ($w_{min}$, $w_{max}$), these weighting factors ($w_r$, $w_g$, $w_b$) are limited to the permissible limits ($w_{min}$, $w_{max}$), wherein each weighting factor value lying below the lower permissible limit ($w_{min}$) is replaced by the lower permissible limit ($w_{min}$), while each weighting factor value lying above the upper permissible limit ($w_{max}$) is replaced by the upper permissible limit ($w_{max}$).

   - wherein, in particular, a cut-off key (13) is provided whose operation so determines and automatically adjusts the brightness value (m), the contrast value (s) and the color angle values ($\vartheta$, $\varphi$) that they result in the weighting factors ($w_r$, $w_g$, $w_b$) being limited to the ($w_{min}$, $w_{max}$) permissible limits.

5. Method according to one of the preceding claims,
**characterized in that**

a) that a default key (9) is provided whose operation loads and adjusts predefined values for the weighting factors ($w_r$, $w_g$, $w_b$) and the offset value (d) or for the brightness value (m), the contrast value (s) and the color angle values ($\vartheta$, $\varphi$), from a memory unit (6), and/or,
b) that a memory key (10) is provided, the operation of which memory key (10) causes the brightness value (m), the contrast value (s) and the color angle values ($\vartheta$, $\varphi$ or the weighting factors ($w_r$, $w_g$, $w_b$) calculated therefrom, and the offset value (d) to be stored in the memory unit (6) or in a further memory and kept available for further retrieval, and/or
c) a reset key (11) is provided whose operation loads from the memory unit (6) the brightness value (m), the contrast value (s) and the color angle values ($\vartheta$, $\varphi$ or the weighting factors ($w_r$, $w_g$, $w_b$) calculated therefrom, and the offset value (d), and/or
d) following a successful selection of the brightness value (m), a contrast value (s) or a color angle value ($\vartheta$, $\varphi$), the imaging rule (T) is applied pixel-wise to the reference image (R) to obtain and display a grayscale image (I).

6. Method according to one of the preceding claims,
**characterized in that**
a mode switch (12) is provided for selecting one of two predetermined modes, wherein,

- upon selection of the first mode, the adjusted imaging rule (T) is displayed without renewed determination based on the brightness (m) adjusted by the brightness controller (3), the contrast value (s) adjusted by the contrast controller (4), and the color angle values ($\vartheta$, $\varphi$) adjusted by the color angle controller (5), even when the weighting factors ($w_r$, $w_g$, $w_b$) exceed the permissible limits ($w_{min}$, $w_{max}$), and
- upon selection of the second mode, the imaging rule (T) according to one of the claims 5 or 6 is determined again and displayed when the weighting factors ($w_r$, $w_g$, $w_b$) exceed the permissible limits ($w_{min}$, $w_{max}$).

7. Device for selecting an imaging rule (T) for the pixel-wise transformation of a three-channel color image (B) of a recorded object (14) into a grayscale image (I) representing this object (14) comprising

- a control unit (8) with which a three-channel reference image (R) of a reference object may be selected,
- a brightness controller (3) for selecting a brightness value (m),
- a contrast controller (4) for selecting a contrast value (s),
- a color angle controller (5) for selecting two color angle values ($\vartheta$, $\varphi$),

wherein the selected brightness value (m), the selected contrast value (s) and the two selected color angle values ($\vartheta$, $\varphi$) are fed to the control unit (8)
wherein the control unit (8) determines preliminary weighting factors ($w_r'$, $w_g'$, $w_b'$) from the two selected color angle values ($\vartheta$, $\varphi$) as follows:

$$w_r' = \sin \vartheta \cdot \cos \varphi,$$

$$w_g' = \sin \vartheta \cdot \sin \varphi,$$

$$w_b' = \cos \vartheta,$$

wherein the control unit (8) defines an auxiliary transformation (T') as follows:

$$T'(r, g, b) = w_r' \cdot r + w_g' \cdot g + w_b' \cdot b,$$

wherein the control unit (8) produces an auxiliary grayscale image (J) with the gray-scale values (J[x.y]) given below from the three-channel reference image (R) with the three color values $R_r(x,y)$, $R_g(x,y)$, $R_b[x,y]$ at the respective coordinates (x, y) by pixel-wise application of the auxiliary transformation (T'):

$$J[x,y] = T'(R_r[x,y], R_g[x,y], R_b[x,y]),$$

wherein the control unit (8) determines the mean value M and the standard deviation S of the grayscale values (J[x,y]) of the auxiliary grayscale image (J), and the weighting factors ($w_r$, $w_g$, $w_b$) and the offset value (d) as follows:

$$w_r = w_r' \cdot s/S,$$

$$w_g = w_g' \cdot s/S,$$

$$w_b = w_b' \cdot s/S,$$

$$d = m - M,$$

and wherein the control unit (8) determines the imaging rule (T) as follows:

$$T(r, g, b) = w_r \cdot r + w_g \cdot g + w_b \cdot b + d.$$

and the target parameters ($w_r$, $w_g$, $w_b$, d) determining the imaging rule (T) are kept available.

8. Device according to claim 7,
**characterized in that**
a test unit to which the imaging rule (T) is fed is located downstream of the control unit (8),
wherein, upon application of the imaging rule (T), the test unit so produces at least one color image (B) of at least one object, while the imaging rule (T) determined through the weighting factors ($w_r$, $w_g$, $w_b$) as well as the offset value d, is applied separately to the pixels of this color image (B), that a grayscale image (I) for the object is produced and, if appropriate, a text and/or symbol is recognized in at least in a part of the grayscale image (I).

9. Device according to claim 7 or 8,
**characterized in that**
the test unit has a fixed-point calculating unit for the execution of the weighting factors ($w_r$, $w_g$, $w_b$) required for the imaging rule (T), wherein the processing width of the fixed-point calculating unit is limited, and, on the basis of this limitation, the permissible values for the weighting factors ($w_r$, $w_g$, $w_b$) lie within the permissible limits ($w_{min}$, $w_{max}$), in particular predetermined by the processing width of the test unit.

10. Device according to claim 9,
**characterized in that**

a) the production of the imaging rule (T) is refused by the control unit (8) in the event of one of the weighting factors ($w_r$, $w_g$, $w_b$) lying outside the permissible limits ($w_{min}$, $w_{max}$) through the selection of a brightness value (m) or a contrast value (s) or the selection of the color angle values ($\vartheta$, $\varphi$),

- wherein the selection of the color angle values ($\vartheta$, $\varphi$) is carried out within predefined limits by means of the selection of a point within a two-dimensional field in the color angle controller (5), wherein for each possible selection of color angle values ($\vartheta$, $\varphi$), the control unit (8) determines, as a function of the respectively selected brightness and contrast value (m, s), whether the weightng factors ($w_r$, $w_g$, $w_b$) lie within the permissible limits ($w_{min}$, $w_{max}$) of the respective imaging rule (T) produced, and, failing which, the respective position in the two-dimensional field is identified as being non-selectable and/or the respective color angle selection is not permitted, and/or

b) in the event that one of the weighting factors ($w_r$, $w_g$, $w_b$) lies outside the permissible limits ($w_{min}$, $w_{max}$), the calculation of the weighting factors ($w_r$, $w_g$, $w_b$) is performed again by the control unit (8), wherein the control unit (8) reduces the contrast value (s) to such an extent that all of the recalculated weighting factors ($w_r$, $w_g$, $w_b$) lie within the permissible limits ($w_{min}$, $w_{max}$), and/or

c) in the event that one or more of the weighting factors ($w_r$, $w_g$, $w_b$) lie(s) outside the permissible limits ($w_{min}$, $w_{max}$), the control unit (8) limits these weighting factors ($w_r$, $w_g$, $w_b$) to the permissible limits ($w_{min}$, $w_{max}$), wherein the control unit (8) replaces each weighting factor value ($w_r$, $w_g$, $w_b$) lying below the lower permissible limit ($w_{min}$) by the lower permissible limit ($w_{min}$) and each weighting factor value lying above the upper permissible limit ($w_{max}$) by the upper permissible limit ($w_{max}$).

- wherein, in particular, a cut-off key (13) is provided upstream of the control unit (8) whose operation so determines and adjusts the brightness value (m), the contrast value (s) and the color angle values ($\vartheta$, $\varphi$) through operation of the control unit (8) that they result in the weighting factors ($w_r$, $w_g$, $w_b$) being limited to the permissible limits ($w_{min}$, $w_{max}$)..

**11.** Device according to one of the claims 7 to 10,
   **characterized in that**

a) a default key (9) is provided upstream of the control unit (8) and upon whose operation, the control unit (8) loads and applies predefined values from a memory unit (6) for the weighting factors ($w_r$, $w_g$, $w_b$) and the offset value (d) and for the brightness value (m) and/or the color angle values ($\vartheta$, $\varphi$)

b) a memory key (10) is provided upstream of the control unit (8) and upon whose operation, the control unit (8) stores or keeps available in the memory unit (6) or in a further memory for a further retrieval of the brightness value (m), the contrast value (s), and the color angle values ($\vartheta$, $\varphi$) or the weighting factors ($w_r$, $w_g$, $w_b$) calculated therefrom and the offset value (d),

c) a reset button (11) is provided upstream of the control unit (8), and upon whose operation, the control unit (8) loads and applies from the memory unit (6), the brightness value (m), the contrast value (s) and the color angle values ($\vartheta$, $\varphi$) or the weighting factors ($w_r$, $w_g$, $w_b$) calculated therefrom and the offset value (d).

**12.** Device according to one of the claims 7 to 11,
   **characterized in that**
   following a successful selection of a brightness value (m), a contrast value (s) or a color angle value ($\vartheta$, $\varphi$), the control unit (8) applies the imaging rule (T) pixel-wise to the reference image (R) and thus produces a preview grayscale image (I) and displays this in a grayscale image display (2).

**13.** Device according to one of the claims 7 to 12,
   **characterized in that**
   a mode switch (12) is provided upstream of the control unit (8) to select one of two predetermined modes, wherein the control unit (8)

- upon selection of the first mode, the adjusted imaging rule (T) is displayed without renewed determination based on the brightness (m) adjusted by the brightness controller (3), the contrast value (s) adjusted by the contrast controller (4), and the color angle values ($\vartheta$, $\varphi$) adjusted by the color angle controller (5), even when the weighting factors ($w_r$, $w_g$, $w_b$) exceed the permissible limits ($w_{min}$, $w_{max}$), and
- upon selection of the second mode, the imaging rule (T) according to claims 10 is determined again and displayed when the weighting factors ($w_r$, $w_g$, $w_b$) exceed the permissible limits ($w_{min}$, $w_{max}$).

**14.** Data carrier on which a computer program for carrying out a method according to one of claims 1 to 6 is stored.

**Revendications**

**1.** Procédé de sélection d'une directive de représentation (T) pour la transformation pixel par pixel d'une image couleurs à trois canaux (B) d'un objet photographié (14) en une image à niveaux de gris (I) représentant cet objet (14), une image de référence à trois canaux (R) d'un objet de référence (15) étant sélectionnée et prédéterminée,

- un régulateur de luminosité (3) étant proposé pour la sélection d'une valeur de luminosité (m),
- un régulateur de contraste (4) étant proposé pour la sélection d'une valeur de contraste (s),
- un régulateur d'angle chromatique (5) étant proposé pour la sélection de deux valeurs d'angles chromatiques $(\vartheta, \varphi)$,
- une valeur de luminosité m, une valeur de contraste s et deux valeurs d'angles chromatiques $\vartheta$ et $\varphi$ étant sélectionnées,
- à partir des deux valeurs d'angles chromatiques $(\vartheta, \varphi)$ sélectionnées, des facteurs de pondération $(w_r', w_g', w_b')$ étant déterminées comme suit :

$$w_r' = \sin \vartheta . \cos \varphi,$$

$$w_g' = \sin \vartheta . \sin \varphi,$$

$$w_b' = \cos \vartheta$$

- une transformation auxiliaire (T') étant déterminée comme suit :

$$T'(r,g,b) = w_r'. r + w_g'. g + w_b'. b,$$

- à partir de l'image de référence à trois canaux (R), avec les valeurs chromatiques $R_r[x,y]$, $R_g[x,y]$, $R_b[x,y]$, au niveau des coordonnées (x, y), par l'application pixel par pixel de la transformation auxiliaire (T'), une image à niveaux de gris auxiliaire (J) est créée avec les valeurs de niveaux de gris (J[x,y]) suivantes :

$$J[x,y] = T'(R_r[x,y], R_g[x,y], R_b[x,y]),$$

- la valeur moyenne M et l'écart standard S des valeurs de niveaux de gris (J[x,y]) de l'image à niveaux de gris auxiliaire (J) étant déterminés,
- les facteurs de pondération $(w_r, w_g, w_b)$ étant déterminés comme suit :

$$w_r = w_r' . s/S,$$

$$w_g = w_g' . s/S,$$

$$w_b = w_b' . s/S,$$

- une valeur d'offset (d) étant fixée comme suit :

$$d = m - M,$$

- et la directive de représentation (T) étant fixée comme suit :

$$T(r,g,b) = w_r . r + w_g . g + w_b . b + d.$$

2. Procédé selon la revendication 1, **caractérisé en ce que** les facteurs de pondération $w_r$, $w_g$ et $w_b$ ainsi que la valeur d'offset d sont transmises à une unité de contrôle,

**en ce que** l'unité de contrôle crée au moins une image couleurs (B) d'au moins un objet et **en ce que** la directive de représentation (T) fixée grâce aux facteurs de pondération $w_r$, $w_g$, $w_b$ ainsi que grâce à la valeur d'offset d est appliquée séparément aux pixels de cette image couleur (B) et une image à niveaux de gris (I) est ainsi créée pour l'objet et **en ce que**, le cas échéant, dans au moins une partie de l'image à niveaux de gris (I), une détection de texte et/ou de symboles est effectuée.

3. Procédé selon la revendication 1 ou 2, **caractérisé en ce que** l'unité de contrôle comprend, pour l'application des facteurs de pondération ($w_r$, $w_g$, $w_b$) nécessaires pour la directive de représentation (T), une unité de calcul à virgule fixe, dont la largeur de traitement est limitée et, du fait de cette limitation, les valeurs admissibles pour les facteurs de pondération ($w_r$, $w_g$, $w_b$) se trouvent à l'intérieur de limites ($w_{min}$, $w_{max}$), plus particulièrement prédéterminées par la largeur de traitement de l'unité de contrôle, et

**en ce que**, dans le cas où, du fait de la sélection d'une valeur de luminosité (m) ou d'une valeur de contraste (s) ou du fait de la sélection des valeurs d'angles chromatiques ($\vartheta$, $\varphi$), un des facteurs de pondération ($w_r$, $w_g$, $w_b$) se trouve à l'extérieur des limites admissibles ($w_{min}$, $w_{max}$), la création de la directive de représentation (T) est refusée.

4. Procédé selon la revendication 3, **caractérisé en ce que**

a) la sélection des valeurs d'angles chromatiques ($\vartheta$, $\varphi$) est effectuée grâce à la sélection d'un point à l'intérieur d'un champ bidimensionnel dans le régulateur d'angle chromatique (5) avec des limites prédéterminées, moyennant quoi, pour toute sélection possible de valeurs d'angles chromatiques ($\vartheta$, $\varphi$), on examine, en fonction de la valeur de luminosité et de contraste (m, s) sélectionnée, si, dans la directive de représentation (T) ainsi obtenue, les facteurs de pondération ($w_r$, $w_g$, $w_b$) se trouvent à l'intérieur des limites admissibles ($w_{min}$, $w_{max}$) et, dans le cas contraire, la position correspondante dans le champ bidimensionnel est marqué comme non sélectionnable et/ou la sélection d'angle chromatique correspondante n'est pas acceptée ou

b) dans le cas où un des facteurs de pondération ($w_r$, $w_g$, $w_b$) se trouverait à l'extérieur des limites admissibles ($w_{min}$, $w_{max}$), le calcul des facteurs de pondération ($w_r$, $w_g$, $w_b$) est effectué à nouveau, la valeur de contraste (s) étant réduite, plus particulièrement de manière automatique, de façon à ce que tous les facteurs de pondération ($w_r$, $w_g$, $w_b$) recalculés se trouvent à l'intérieur des limites admissibles ($w_{min}$, $w_{max}$) ou

c) dans le cas où un ou plusieurs facteurs de pondération ($w_r$, $w_g$, $w_b$) se trouverait à l'extérieur des limites admissibles ($w_{min}$, $w_{max}$), ces facteurs de pondération ($w_r$, $w_g$, $w_b$) sont limités aux limites admissibles ($w_{min}$, $w_{max}$), en remplaçant chaque valeur de facteur de pondération se trouvant en dessous de la limite inférieure admissible ($w_{min}$) par la limite inférieure admissible ($w_{min}$) et en remplaçant chaque valeur de facteur de pondération dépassant la limite supérieure admissible ($w_{max}$) par la limite supérieure admissible ($w_{max}$),

- plus particulièrement une touche de coupe (13) étant proposée à l'actionnement, et lors de son actionnement, la valeur de luminosité (m), la valeur de contraste (s) et la valeur d'angle chromatique ($\vartheta$, $\varphi$) étant déterminées et réglées automatiquement de façon à obtenir les facteurs de pondération ($w_r$, $w_g$, $w_b$) limités aux limites admissibles ($w_{min}$, $w_{max}$).

5. Procédé selon l'une des revendications précédentes, **caractérisé en ce que**

a) une touche par défaut (9) est proposée à l'actionnement et lors de son actionnement, des valeurs prédéfinies pour les facteurs de pondération ($w_r$, $w_g$, $w_b$) et la valeur d'offset (d) ou pour la valeur de luminosité (m), pour la valeur de contraste et les valeurs d'angles chromatiques ($\vartheta$, $\varphi$) sont chargées à partir d'une unité d'enregistrement (6) et réglées, et/ou

b) une touche d'enregistrement (10) est proposée à l'actionnement, et lors de l'actionnement de la touche d'enregistrement (10), la valeur de luminosité (m), la valeur de contraste (s) et les valeurs d'angles chromatiques ($\vartheta$, $\varphi$ ou les facteurs de pondération ($w_r$, $w_g$, $w_b$) calculés à partir de celles-ci et la valeur d'offset (d) sont enregistrées dans l'unité d'enregistrement (6) ou dans une autre mémoire et mises à disposition pour un rappel ultérieur et/ou

c) une touche de réinitialisation (11) est proposée à l'actionnement et, lors de l'actionnement de la touche de réinitialisation (11), la valeur de luminosité (m), la valeur de contraste (s) et les valeurs d'angles chromatiques ($\vartheta$, $\varphi$) ou les facteurs de pondération ($w_r$, $w_g$, $w_b$) calculés à partir de celles-ci et la valeur d'offset (d) sont chargées à partir de l'unité d'enregistrement (6) et/ou

d) après une sélection de la valeur de luminosité (m), d'une valeur de contraste (s) ou d'une valeur d'angle chromatique ($\vartheta$, $\varphi$), la directive de représentation (T) est appliquée pixel par pixel à l'image de référence (R), une image à niveaux de gris (I) étant obtenue et affichée.

6. Procédé selon l'une des revendications précédentes, **caractérisé en ce qu'**un commutateur de mode (12) est proposé pour la sélection d'un parmi deux modes, moyennant quoi

- lors de la sélection du premier mode, la directive de représentation (T) réglée est affichée sans nouvelle détermination sur la base de la valeur de luminosité (m) réglée au moyen du régulateur de luminosité (3), de la valeur de contraste (s) réglée au moyen du régulateur de contraste (4) et des valeurs d'angles chromatiques ($\vartheta$, $\varphi$) réglées au moyen du régulateur d'angle chromatique (5), même lors du dépassement des limites admissibles ($w_{min}$, $w_{max}$) pour les facteurs de pondération ($w_r$, $w_g$, $w_b$) et
- lors de la sélection du deuxième mode, la directive de représentation (T) selon l'une des revendications 5 ou 6 est déterminée à nouveau et il est affiché si les facteurs de pondération ($w_r$, $w_g$, $w_b$) dépassent les limites admissibles ($w_{min}$, $w_{max}$).

7. Dispositif pour la sélection d'une directive de représentation (T) pour la transformation pixel par pixel d'une image couleurs à trois canaux (B) d'un objet photographié (14) en une image à niveaux de gris (I) représentant cet objet (14), comprenant

- une unité de commande (8) avec laquelle une image de référence à trois canaux (R) d'un objet de référence peut être sélectionnée,
- un régulateur de luminosité (3) pour la sélection d'une valeur de luminosité (m),
- un régulateur de contraste (4) pour la sélection d'une valeur de contraste (s),
- un régulateur d'angle chromatique (5) pour la sélection de deux valeurs d'angles chromatiques ($\vartheta$, $\varphi$),

la valeur de luminosité m sélectionnée, la valeur de contraste s sélectionnée et les deux valeurs d'angles chromatiques $\vartheta$, $\varphi$ sélectionnées étant entrées dans l'unité de commande (8)

l'unité de commande (8) fixant, à partir des deux valeurs d'angles chromatiques ($\vartheta$, $\varphi$) sélectionnées, des facteurs de pondération provisoire ($w_r'$, $w_g'$, $w_b'$) comme suit :

$$w_r' = \sin \vartheta \cdot \cos \varphi,$$

$$w_g' = \sin \vartheta \cdot \sin \varphi,$$

$$w_b' = \cos \vartheta$$

l'unité de commande (8) fixant une transformation auxiliaire (T') comme suit :

$$T'(r,g,b) = w_r' \cdot r + w_g' \cdot g + w_b' \cdot b,$$

l'unité de commande (8) créant, à partir de l'image de référence à trois canaux (R), avec les valeurs chromatiques $R_r[x,y]$, $R_g[x,y]$, $R_b[x,y]$, au niveau des coordonnées (x, y), par l'application pixel par pixel de la transformation auxiliaire (T'), une image à niveaux de gris auxiliaire (J) avec les valeurs de niveaux de gris ($J[x,y]$) suivantes :

$$J[x,y] = T'(R_r[x,y], R_g[x,y], R_b[x,y]),$$

l'unité de commande (8) déterminant la valeur moyenne M et l'écart standard S des valeurs de niveaux de gris ($J[x,y]$) de l'image à niveaux de gris auxiliaire (J), les facteurs de pondération ($w_r$, $w_g$, $w_b$), ainsi que la valeur d'offset (d) étant déterminés comme suit :

$$w_r = w_r' \cdot s/S,$$

$$w_g = w_g' \cdot s/S,$$

$$w_b = w_b' \cdot s/S,$$

$$d = m - M,$$

et l'unité de commande (8) déterminant la directive de représentation (T) comme suit :

$$T(r,g,b) = w_r \cdot r + w_g \cdot g + w_b \cdot b + d$$

et mettant à disposition les paramètres cibles ($w_r$, $w_g$, $w_b$, d) déterminant la directive de représentation (T).

8. Dispositif selon la revendication 7, **caractérisé par** une unité de contrôle branchée en aval de l'unité de commande (8), dans laquelle est entrée la directive de représentation (T),
l'unité de contrôle créant, lors de l'existence de la directive de représentation (T), au moins une image couleurs (B) d'au moins un objet et appliquant séparément la directive de représentation (T) fixée par les facteurs de pondération $w_r$, $w_g$, $w_b$, ainsi que la valeur d'offset d aux pixels de cette image couleurs (B) et crée ainsi une image à niveaux de gris (I) pour l'objet et effectue, le cas échéant, dans au moins une partie de l'image à niveaux de gris (I), une détection de texte et/ou de symboles.

9. Dispositif selon la revendication 7 ou 8, **caractérisé en ce que** l'unité de contrôle comprend, pour la détermination des facteurs de pondération ($w_r$, $w_g$, $w_b$) nécessaires pour la directive de représentation (T), une unité de calcul à virgule fixe, dont la largeur de traitement est limitée et, du fait de cette limitation, les valeurs admissibles pour les facteurs de pondération ($w_r$, $w_g$, $w_b$) se trouvent à l'intérieur de limites admissibles ($w_{min}$, $w_{max}$), plus particulièrement prédéterminées par la largeur de traitement de l'unité de contrôle.

10. Dispositif selon la revendication 9, **caractérisé en ce que**

   a) l'unité de commande (8), dans le cas où, du fait de la sélection d'une valeur de luminosité (m) ou d'une valeur de contraste (s) ou du fait de la sélection des valeurs d'angles chromatiques ($\vartheta, \varphi$), un des facteurs de pondération ($w_r$, $w_g$, $w_b$) se trouve à l'extérieur des limites admissibles ($w_{min}$, $w_{max}$), refuse la création de la directive de représentation (T),

   - moyennant quoi, plus particulièrement le régulateur d'angle chromatique (5) permet la sélection des valeurs d'angles chromatiques ($\vartheta, \varphi$) par la sélection d'un point à l'intérieur d'un champ bidimensionnel à l'intérieur de limites prédéterminées et l'unité de commande (8) examine, pour chaque sélection possible de valeurs d'angle chromatique ($\vartheta, \varphi$), en fonction de la valeur de luminosité et de contraste (m, s), si dans la directive de représentation (T), les facteurs de pondération ($w_r$, $w_g$, $w_b$) se trouvent à l'intérieur des limites admissibles ($w_{min}$, $w_{max}$) et, dans le cas contraire, la position correspondante dans le champ bidimensionnel est marquée comme non sélectionnable et/ou ne permet pas la sélection de l'angle chromatique correspondant,
   et/ou

   b) l'unité de commande (8), dans le cas où un ou plusieurs des facteurs de pondération ($w_r$, $w_g$, $w_b$) déterminés par elle se trouveraient à l'extérieur des limites admissibles ($w_{min}$, $w_{max}$), effectue à nouveau le calcul des facteurs de pondération ($w_r$, $w_g$, $w_b$), l'unité de commande (8) réduisant dans ce cas la valeur de contraste (s) de façon à ce que tous les facteurs de pondération ($w_r$, $w_g$, $w_b$) recalculés se trouvent à l'intérieur des limites admissibles ($w_{min}$, $w_{max}$) et/ou
   c) l'unité de commande (8), dans le cas où un ou plusieurs des facteurs de pondération ($w_r$, $w_g$, $w_b$) déterminés par elle se trouveraient à l'extérieur des limites admissibles ($w_{min}$, $w_{max}$), limite les facteurs de pondération ($w_r$, $w_g$, $w_b$) aux limites admissibles ($w_{min}$, $w_{max}$) en remplaçant chaque valeur de facteur de pondération se trouvant en dessous de la limite inférieure admissible ($w_{min}$) par la limite inférieure admissible ($w_{min}$) et en remplaçant chaque valeur de facteur de pondération dépassant la limite supérieure admissible ($w_{max}$) par la limite supérieure admissible ($w_{max}$),

   - plus particulièrement une touche de coupe (13), disposée en amont de l'unité de commande (8) étant prévue, et lors de son actionnement, l'unité de commande (8) détermine et règle la valeur de luminosité (m), la valeur de contraste (s) et la valeur d'angle chromatique ($\vartheta$, $\varphi$) de façon à obtenir les facteurs de pondération ($w_r$, $w_g$, $w_b$) limités aux limites admissibles ($w_{min}$, $w_{max}$).

**11.** Dispositif selon l'une des revendications 7 à 10, **caractérisé par**

a) une touche par défaut (9), disposée en amont de l'unité de commande (8), lors de l'actionnement de laquelle l'unité de commande (8) charge et applique des valeurs prédéfinies pour les facteurs de pondération ($w_r$, $w_g$, $w_b$) et la valeur d'offset (d) ou pour la valeur de luminosité (m), pour la valeur de contraste (s) et les valeurs d'angles chromatiques ($\vartheta$, $\varphi$), à partir d'une unité d'enregistrement (6) et/ou

b) une touche d'enregistrement (10), disposée en amont de l'unité de commande (8), lors de l'actionnement de laquelle l'unité de commande (8) enregistre et met à disposition pour un rappel ultérieur la valeur de luminosité (m), la valeur de contraste (s) et les valeurs d'angles chromatiques ($\vartheta$, $\varphi$) ou les facteurs de pondération ($w_r$, $w_g$, $w_b$) calculés à partir de celles-ci et la valeur d'offset (d), dans l'unité d'enregistrement (6) ou dans une autre mémoire et/ou

c) une touche de réinitialisation (11) disposée en amont de l'unité de commande (8), lors de l'actionnement de laquelle l'unité de commande charge et applique la valeur de luminosité (m), la valeur de contraste (s) et les valeurs d'angles chromatiques ($\vartheta$, $\varphi$) ou les facteurs de pondération ($w_r$, $w_g$, $w_b$) calculés à partir de celles-ci et la valeur d'offset (d), à partir de l'unité d'enregistrement (6).

**12.** Dispositif selon l'une des revendications 7 à 11, **caractérisé en ce que** l'unité de commande (8) applique, après une sélection d'une valeur de luminosité (m), d'une valeur de contraste (s) ou d'une valeur d'angle chromatique ($\vartheta$, $\varphi$), la directive de représentation (T) pixel par pixel à l'image de référence (R) et génère ainsi une image à niveaux de gris de prévisualisation (I) et la représente dans un affichage d'image à niveaux de gris (2).

**13.** Dispositif selon l'une des revendications 7 à 12, **caractérisé par** un commutateur de mode (12), disposé en amont de l'unité de commande (8), pour la sélection d'un parmi deux modes prédéterminés, moyennant quoi l'unité de commande (8)

- lors de la sélection du premier mode, affiche, sans nouvelle détermination, la directive de représentation (T) réglée sur la base de la valeur de luminosité (m) réglée au moyen du régulateur de luminosité (3), de la valeur de contraste (s) réglée au moyen du régulateur de contraste (4) et des valeurs d'angles chromatiques ($\vartheta$, $\varphi$) réglées au moyen du régulateur d'angle chromatique (5), même lors du dépassement des limites admissibles ($w_{min}$, $w_{max}$) pour les facteurs de pondération ($w_r$, $w_g$, $w_b$) et

- lors de la sélection du deuxième mode, détermine à nouveau la directive de représentation (T) selon la revendication 10 et affiche le cas échéant si les facteurs de pondération ($w_r$, $w_g$, $w_b$) dépassent les limites admissibles ($w_{min}$, $w_{max}$).

**14.** Support de données sur lequel est enregistré un programme informatique pour l'exécution d'un procédé selon l'une des revendications 1 à 6.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20020005855 A1
- US 20060072158 A1
- US 20130236091 A1
- US 20110176156 A